# EUROPEAN PATENT APPLICATION

(11) **EP 4 823 204 A2**
(43) Date of publication of application: **14.10.2026**
(21) Application number: 26201597.7
(22) Date of filing: 12.05.2021
(51) Int. Cl.: H04W 72/0446

(54) **WIRELESS COMMUNICATION METHOD, FIRST DEVICE, AND SECOND DEVICE**

(62) Document number(s) of the earlier application(s) in accordance with Art. 76 EPC: 21941325.9 / 4 329 399
(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong, 523860 (CN); HE, Chuanfeng, Dongguan, Guangdong, 523860 (CN); XU, Weijie, Dongguan, Guangdong, 523860 (CN); ZUO, Zhisong, Dongguan, Guangdong, 523860 (CN)
(74) Representative: Penza, Giancarlo

(57) **Abstract**

Provided in the embodiments of the present application are a wireless communication method, a first device, and a second device. The method comprises: determining the number of retransmissions of a first physical channel; performing counting on the basis of multiple available time domain units corresponding to the first physical channel, to obtain a count of each available time domain unit; and on the basis of the number of retransmissions and the count of each available time domain unit, sending duplication data of the first physical channel. The method provided by the present application can ensure that count results obtained by a network device and a terminal device for available time domain resources maintain consistency, thereby facilitating the improvement of the decoding performance, and also facilitating a network side and a terminal side having consistent understanding of an RV version corresponding to each transmission in retransmission, thus improving the quality of communication.

## Description

### TECHNICAL FIELD

Embodiments of the disclosure relate to the technical field of communications, and in particular to a wireless communication method, a first device and a second device.

### BACKGROUND

Up to now, the number of repetitions of repeated transmission of Physical Uplink Shared Channel (PUSCH) is semi-statically configured, and PUSCH repetitions in some slots will be ignored (or cancelled) when used together with flexible slot structures. That is, in some configurations, specifically in the case of Time Division Duplexing (TDD), the configured number of repetitions does not achieve a desired coverage enhancement effect.

Schemes for PUSCH enhancement are usually divided into PUSCH repetition type B and PUSCH repetition type A. For the PUSCH repetition type A, a terminal determines a corresponding redundancy version (RV) based on an n^{th} transmission occasion. At this time, if PUSCH transmission corresponding to RV0 is cancelled due to an unexpected situation (for example, sending Physical Random Access Channel (PRACH)), the decoding performance will deteriorate. For example, assuming that one transmission occasion is one slot, a terminal device, in the process of sending multiple PUSCH repetitions to a network device, needs to determine a respective version number of a RV for one of the multiple PUSCH repetitions based on a time domain position of a slot used for sending the PUSCH repetition. If the slot used for sending the PUSCH repetition is cancelled, that is, the PUSCH repetition corresponding to the RV is cancelled, and if the cancelled PUSCH repetition is a PUSCH repetition corresponding to RV₀, the decoding performance will deteriorate. In addition, for the PUSCH repetition type B, the terminal determines a respective RV based on the number of actual repetitions. If there is a cancelled PUSCH repetition, the RVs corresponding to subsequent actual repetitions will change, but the network side is not aware of it, which will lead to the problem that the network side and user equipment (UE) have inconsistent understanding of RVs corresponding to PUSCHs during repeated transmission of PUSCH.

### SUMMARY

Embodiments of the disclosure provide a wireless communication method, and a user equipment (UE), which can improve the decoding performance, and meanwhile enables the network side and terminal side have consistent understanding of the RV corresponding to each transmission, thereby improving the communication quality. The invention is set out in the appended set of claims.

Based on the claimed technical solutions, in repeated transmission of a first physical channel, a plurality of available time domain units corresponding to the first physical channel are counted to obtain a count for each of the plurality of available time domain units; and then sending of repeated data of the first physical channel is performed based on the number of repetitions and the count for each available time domain unit. That is, the available time domain unit is counted regardless of whether it is cancelled or not. Based on this, the result of the count for the available time domain units will be consistent for a network device and a terminal device, which is not only beneficial to improve the decoding performance, but also enables the network device and the terminal device to keep consistent understanding of the RV corresponding to each transmission during the repeated transmission, thereby improving the communication quality.

### BRIEF DESCRIPTION OF THE DRAWINGS

FIG. 1 is schematic diagram of a system framework according to an embodiment of the disclosure.
FIG. 2 is a schematic diagram of a slot aggregated PUSCH repeated transmission according to an embodiment of the disclosure.
FIG. 3 is a schematic diagram of PUSCH repetition type B according to an embodiment of the disclosure.
FIG. 4 is a schematic flow chart of a wireless communication method according to an embodiment of the disclosure.
FIG. 5 is a schematic diagram of counting the number of repetitions based on actual PUSCH repetitions according to an embodiment of the disclosure.
FIG. 6 is a schematic diagram of counting the number of repetitions based on available time domain units according to an embodiment of the disclosure.
FIG. 7 is a schematic diagram of determination of RV based on a count for actual PUSCH repetitions according to an embodiment of the disclosure.
FIG. 8 is a schematic diagram of determination of RV based on transmission occasions according to an embodiment of the disclosure.
FIG. 9 is a schematic diagram of determination of RV based on a count for available time domain units according to an embodiment of the disclosure.
FIG. 10 is another schematic flowchart of a wireless communication method according to an embodiment of the disclosure.
FIG. 11 is a schematic block diagram of a first device according to an embodiment of the disclosure.
FIG. 12 is a schematic block diagram of a second device according to an embodiment of the disclosure.
FIG. 13 is a schematic block diagram of a communication device according to an embodiment of the disclosure.
FIG. 14 is a schematic block diagram of a chip according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

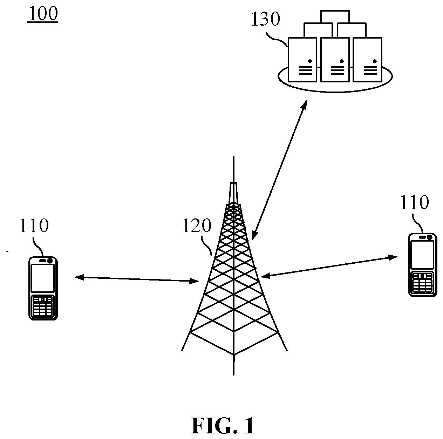

FIG. 1 is schematic diagram of a system framework according to an embodiment of the disclosure.

As illustrated in FIG. 1, a communication system 100 may include terminal devices 110 and a network device 120. The network device 120 may communicate with the terminal devices 110 through an air interface. Multi-service transmission is supported between the terminal devices 110 and the network device 120.

**[**0023] It should be understood that embodiments of the disclosure are illustrative only with the communication system 100 but are not limited thereto. That is, the technical solutions of the embodiments of the disclosure can be applied to various communication systems, for example, a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a fifth Generation (5G) communication system (also called a New Radio (NR) communication system), or a future communication system, etc.

**[**0024] In the communication system 100 illustrated in FIG. 1, the network device 120 may be an access network device communicating with the terminal devices 110. The access network device may provide communication coverage for a specific geographical region and may communicate with terminal devices 110 (for example, UE) located in the coverage.

**[**0025] The network device 120 may be an Evolutional Node B (eNB or eNodeB) in the LTE system, or a Next Generation Radio Access Network (NGRAN) device, or a base station (gNB) in an NR system, or a wireless controller in a Cloud Radio Access Network (CRAN). Alternatively, the network device 120 may be a relay station, an access point, a vehicle-mounted device, a wearable device, a hub, a switch, a network bridge, a router, or a network device in a future evolved Public Land Mobile Network (PLMN), etc.

**[**0026] The terminal device 110 may be any terminal device, which includes, but is not limited to, a terminal device in wired or wireless connection with the network device 120 or other terminal devices.

**[**0027] For example, the terminal device 110 may refer to an access terminal, User Equipment (UE), a user unit, a user station, a mobile station, a mobile platform, a remote station, a remote terminal, a mobile device, a user terminal, a terminal, a wireless communication device, a user agent or a user device. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal in the 5G network, a terminal in the future evolved Public Land Mobile Network (PLMN) or the like.

**[**0028] Device to Device (D2D) communication may be performed between the terminal devices 110.

**[**0029] The wireless communication system 100 may also include a core network device 130 communicating with the base station, the core network device 130 may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device of the core network. It should be understood that SMF+PGW-C can achieve the functions that both SMF and PGW-C can achieve simultaneously. In the process of network evolution, the core network device may also be called by other names, or a new network entity may be formed by dividing the functions of the core network, which is not limited by the embodiments of the disclosure.

**[**0030] Various functional units in the communication system 100 may further realize communication by establishing connections through a next generation (NG) interface.

**[**0031] For example, the terminal device establishes an air interface connection with an access network device through NR interface for transmitting user plane data and control plane signaling. Terminal device can establish a control plane signaling connection with an AMF through NG interface 1 (abbreviated as N1). The access network device, such as a next generation radio access base station (gNB), may establish a user plane data connection with a UPF through an NG interface 3 (abbreviated as N3). The access network device can establish a control plane signaling connection with an AMF through NG interface 2 (abbreviated as N2). The UPF can establish a control plane signaling connection with the SMF through an NG interface 4 (abbreviated as N4). The UPF can exchange user plane data with a data network through an NG interface 6 (abbreviated as N6). The AMF can establish a control plane signaling connection with the SMF through an NG interface 11 (abbreviated as N11). The SMF can establish a control plane signaling connection with Policy Control Function (PCF) through an NG Interface 7 (abbreviated as N7).

**[**0032] FIG. 1 exemplarily illustrates one base station, one core network device and two terminal devices. Optionally, the wireless the communication system 100 may include multiple base station devices and another number of terminal devices may be included in coverage of each base station, which is not limited in the embodiments of the disclosure.

**[**0033] It is to be understood that a device with a communication function in the network/system in the embodiments of the disclosure may be called a communication device. Taking the communication system 100 illustrated in FIG. 1 as an example, the communication devices may include the network device 110 and terminal devices 120 which have the communication function, and the network device 110 and the terminal devices 120 may be the specific devices mentioned above and will not be elaborated herein. The communication devices may further include other devices in the communication system 100, for example, other network entities such as a network controller and a Mobility Management Entity (MME) and other network entities, which are not limited in the embodiments of the disclosure.

**[**0034] It is to be understood that terms "system" and "network" used herein may often be used interchangeably herein. Herein, term "and/or" is only an association relationship that describes associated objects and represents that three relationships may exist. For example, A and/or B may represent three conditions: independent existence of A, existence of both A and B and independent existence of B. In addition, character "/" used herein usually represents that the associated objects before and after the character "/" form an "or" relationship.

**[**0035] In order to enhance the reliability of uplink transmission, NR Release 15 (R15) introduces slot aggregated PUSCH repeated transmission. The slot aggregated PUSCH repeated transmission means that the same transport block (TB) is repeatedly transmitted k times with different RVs. A base station configures the number of repetitions K for the terminal through a high-layer parameter, i.e., PUSCH-AggregationFactor. The terminal repeatedly sends the same TB on K consecutive slots, and a PUSCH replica carrying the TB in each slot occupies the same symbol in the time domain. The RV of a first PUSCH replica is indicated by uplink grant signaling, and RVs of the remaining PUSCH replicas are cycled in the order of {0, 2, 3, 1}. The transmission of RVs will be illustrated with reference to Table 1.

**Table 1**

| RV_{id} indicated by DCI scheduling PUSCH | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**0036] As illustrated in Table 1, the terminal can achieve rate matching for TBs through a cyclic buffer. That is, the terminal can store encoded bits in the cyclic buffer, and read them sequentially from the cyclic buffer according to the RVs in each transmission, so as to realize rate matching. In other words, for each transmission, the read positions of the rate matching are determined by the RVs, or in other words, the RVs may be used to indicate where the data is extracted from the buffer. As an example, assume that four RVs are preset in the cyclic buffer, which are RV₀, RV₁, RV₂, and RV₃. The selection order of the four RVs is [0, 2, 3, 1], that is, a first transmission starts at RV₀, a second transmission starts at RV2, a third transmission starts at RV3, and a fourth transmission starts at RV1. The first transmission refers to an initial transmission of data, and the second transmission, third transmission and fourth transmission are all retransmissions of data. The order of 0, 2, 3 and 1 is the typical selection order for RVs in LTE/NR, and 0, 2, 3 and 1 are values corresponding to the first RV (i.e., RV₀), the third RV (i.e., RV₂), the fourth RV (i.e., RV₃) and the second RV (RV₁), respectively.

**[**0037] If there is at least one semi-static downlink symbol in the time domain resource corresponding to the PUSCH replica in a slot, then PUSCH in the slot is not sent.

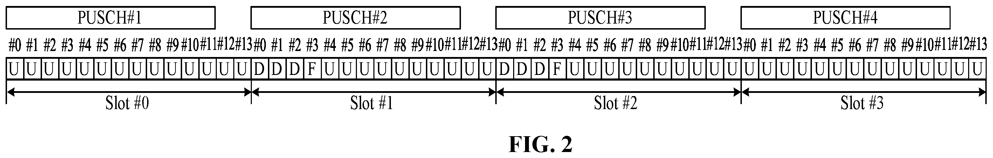

**[**0038] FIG. 2 is a schematic diagram of a slot aggregated PUSCH repeated transmission according to an embodiment of the disclosure.

**[**0039] As illustrated in FIG. 2, a base station configures a terminal to repeatedly send a TB four times, and a PUSCH replica occupies symbols #0 to #11 in each slot. However, since the symbols #0 to #2 in both slot #1 and in slot #2 are semi-static downlink symbols, the second PUSCH repetition to be sent on slot #1 and the third PUSCH repetition to be sent on slot #2 are discarded and not sent.

**[**0040] For the slot aggregated PUSCH repetition in uplink grant-free scheduling, the number of repetitions of TBs is configured by the high-layer parameter RepK.

**[**0041] The solutions of PUSCH enhancement are divided into PUSCH repetition type B and PUSCH repetition type A.

**[**0042] For PUSCH repetition type B, a base station sends an uplink grant or a grant-free to indicate one or more nominal PUSCH repetitions. A terminal transmits one or more actual PUSCH replicas in one slot or transmits two or more actual PUSCH replicas in multiple consecutive available slots. The base station adds in a Time Domain Resource Allocation (TDRA) table a column, called numberofrepetition, indicating the number of replicas for PUSCH repetition type B, and the value of numberofrepetition can be {1, 2, 3, 4, 7, 8, 12, 16}. The uplink scheduling signaling or the first type of grant-free configuration information indicates a start symbol S and a duration L of the first nominal PUSCH replica, and the duration L of each nominal PUSCH replica is the same, where 0 ≤ S ≤ 13, 1 ≤ L ≤ 14. The high-layer signaling indicates S with 4bits and L with 4bits, respectively, so that S + L > 14 can be realized. The transport block size (TBS) of the nominal and actual PUSCH replicas is determined based on the time domain length L of the nominal PUSCH. Beginning with the second nominal PUSCH replica, the start symbol of the nominal PUSCH replica is the next symbol to the end symbol of the previous nominal PUSCH replica.

**[**0043] Before determining the time domain resources of an actual PUSCH replica, the terminal needs to determine an invalid symbol, and the remaining symbols can be considered as potentially valid symbols. If the number of consecutive potentially valid symbols of a nominal PUSCH replica in a slot is greater than zero, an actual PUSCH replica may be mapped, and time domain resources of a nominal PUSCH replica may include time domain resources of one or more actual PUSCH replicas. The terminal does not send an actual PUSCH replica of a single symbol unless the single symbol is the duration L of the nominal PUSCH replica indicated by the base station.

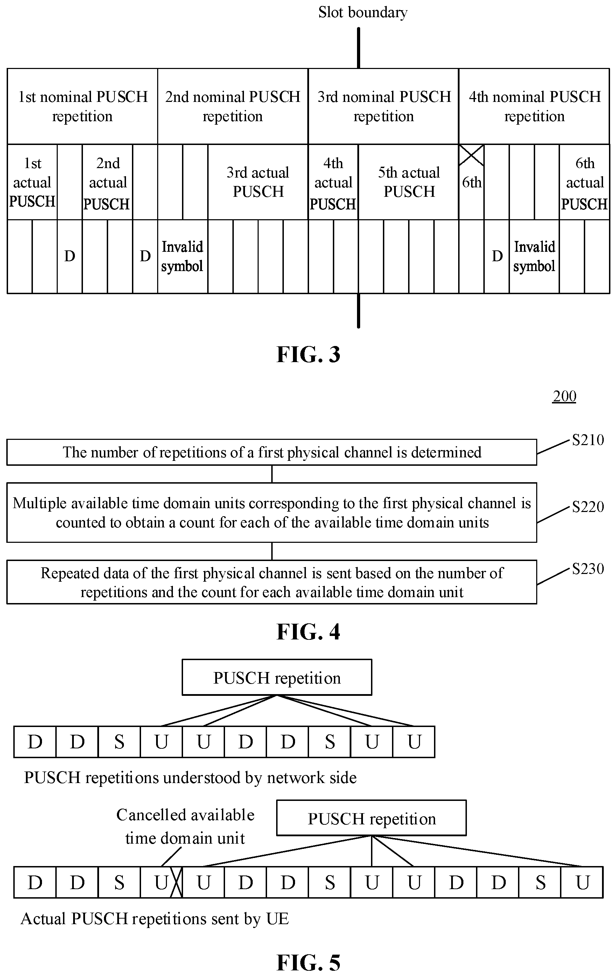

**[**0044] FIG. 3 is a schematic diagram of PUSCH repetition type B according to an embodiment of the disclosure.

**[**0045] As illustrated in FIG. 3, a base station sends an uplink grant or grant-free indicating four nominal PUSCH repetitions, each of which has a duration L equal to four. The time domain resources of the first nominal PUSCH replica may include time domain resources of two actual PUSCH replicas (i.e. the first actual PUSCH replica and the second actual PUSCH replica). The time domain resources of the second nominal PUSCH replica may include time domain resources of one actual PUSCH replica (i.e. the third actual PUSCH replica). The time domain resources of the third nominal PUSCH replica may include time domain resources of two actual PUSCH replicas (i.e. the fourth actual PUSCH replica and the fifth actual PUSCH replica). The time domain resources of the fourth nominal PUSCH replica may include time domain resources of two actual PUSCH replicas, and however, since the time domain resource of an earlier actual PUSCH replica is a symbol, the actual PUSCH replica is not sent, that is, only the later actual PUSCH replica (that is, the sixth actual PUSCH replica) is sent.

**[**0046] In some implementations, the terminal may determine invalid symbols in at least one of the following manners.

### [0047] First Manner

**[**0048] Downlink symbols semi-statically configured by a high-layer parameter tdd-UL-DL-ConfigurationCommon or tdd-UL-DL-Configuration Dedicated are invalid symbols.

### [0049] Second Manner

**[**0050] A symbol-level Bitmap is configured through a high-layer parameter InvalidSymbolPattern, and a bit value of 1 indicates that a corresponding symbol in the symbol-level Bitmap is an invalid symbol. When DCI format 0_1 or DCI format 0_2 are used for scheduling PUSCH repetitions or activating the second type grant-free PUSCH repetition, and if an indication information field of 1 Bit for an invalid symbol pattern is configured in the DCI, the terminal applies the invalid symbol pattern when the indication information field of the invalid symbol pattern is 1; the terminal ignores the invalid symbol pattern when the indication information field of the invalid symbol pattern is not 1. If the DCI does not include the indication information field of the invalid symbol pattern, the terminal directly applies the invalid symbol pattern according to the configuration of the high-layer parameter InvalidSymbolPattern. Different DCI formats are used to independently configure indication information fields of the invalid symbol pattern.

**[**0051] For PUSCH repetition type A, a base station can add in a TDRA table configured by high-layer signaling a column numberofrepetitions for indicating the number of repetitions K of the PUSCH repetition type A. If numberofrepetitions is not configured, the number of repetitions K is determined by a high-layer parameter pusch-AggregationFactor. If neither of the above two parameters is configured, the number of repetitions K is 1. The PUSCH repetition type A means that the user sends the same TB on K consecutive slots, which occupies exactly the same symbol position (that is, both a starting symbol position and the occupied symbol length are the same) in the K slots. The similarity between the PUSCH repetition type A and Hybrid Automatic Repeat Request (HARQ) is that both of them can be regarded as retransmission of information. The difference between them is that retransmission is triggered only when Negative Acknowledgement (NACK) is received for HARQ, while PUSCH can be directly retransmitted K times after configuration of PUSCH repetition is completed. The version number of the first transmission can be determined according to indication information in the Downlink Control Information (DCI) field, where the indication information can occupy two bits; and the subsequent RV numbers cycle according to an order of 0, 2, 3 and 1. For example, if DCI indicates that a version number for the first transmission is 2, then the subsequent RV numbers are 3, 1, 0, 2...in sequence.

**[**0052] For grant-free PUSCH repetition, when the high-layer parameter PUSCHRepTypeIndicatorForType1Configuredgrant is configured as PUSCH-RepTypeB, the grant-free PUSCH repetition is PUSCH repetition type B; when the high-layer parameter PUSCHRepTypeIndicatorForType1Configuredgrant is not configured as PUSCH-RepTypeB, the grant-free PUSCH repetition is PUSCH repetition type A. If the numberofrepetitions exists in the TDRA table, the number of nominal repetitions of PUSCH is determined by a row in the TDRA table, otherwise, the number of nominal repetitions of PUSCH is determined by the high-layer parameter repK.

**[**0053] It can be seen from the above that the number of PUSCH repetitions is semi-statically configured, and PUSCH repetitions in some slots will be ignored when used together with flexible slot structures. Therefore, in some configurations, specifically, in the case of TDD, the configured number of repetitions does not achieve a desired coverage enhancement effect.

**[**0054] In addition, the Release 17 (R17) of the third Generation Partnership Project (3GPP) considers introducing TB processing over multi-slot (TBoMS) in PUSCH repetitions. That is, the size of TBS is determined based on multiple slots, or a TB is transmitted on multiple slots. However, for the rate matching mechanism of R15/Release 16 (R16), PUSCH repetition type A performs rate matching processing based on the RV on each slot. If rate matching is performed on the TBs in TboMS according to the rate matching mechanism of R15/R16, and when the rate matching is performed on each slot based on one RV, since TBS is determined based on multiple slots, it is possible to lose the system bits corresponding to RV0 and/or RV1, which degrades the decoding performance. For example, when there are not enough symbols available for uplink transmission in a slot to transmit bit sequences corresponding to a RV, system bits corresponding to RV0 and/or RV1 may be lost, resulting in degradation of decoding performance.

**[**0055] Based on this, the embodiments of the disclosure provide a wireless communication method, a terminal device and a network device, which can not only realize rate matching of TBs in TboMS, but also avoid losing system bits corresponding to RV₀ and/or RV₁, so as to improve decoding performance for sequences after rate matching.

**[**0056] For the convenience of understanding the solutions provided by this disclosure, an encoding process of Low Density Parity check (LDPC) codes is briefly explained below.

**[**0057] In the encoding process of LDPC codes, after receiving a TB from a Media Access Control (MAC) layer, a physical layer first adds a Cyclic Redundancy Check (CRC) (16 bits or 24 bits) to the TB. After adding the CRC, if the TB contains more than a certain number of bits, the TB needs to be divided into two or more code blocks with the same length. Then, each code block is added with CRC, and LDPC encoding is independently performed on each code block with CRC. Then, each encoded code block is subjected to rate matching, HARQ processing and interleaving. CRC is a channel encoding technology where check codes with fixed number of bits are generated according to network data packets or computer files, and is mainly used to detect or check errors that may occur after data transmission or data storage. The CRC uses the principle of division and remainder to detect errors. Specifically, the CRC adds (n-k) redundancy bits, i.e., Frame Check Sequence (FCS), after k-bit data D to be transmitted to form an n bits of transmission frame T. Rate matching means that bits on a transmission channel(s) are repeated, zero-padded or punctured to match the bearer capabilities of the physical channels, so that a bit rate required by a transmission format is achieved during channel mapping. In the rate matching, if the number of input bits is less than the number of output bits, repetition or zero-bit padding is used. If the number of input bits is more than the number of output bits, puncturing is used. Puncturing means that some bits are cancelled according to a certain pattern. That is, some bits are removed or cancelled from the bit sequence, and the following bits are moved forward one bit in turn. Repetition is to insert a current bit once between the current bit and a following bit. Zero-filling is to insert a zero bit between the current bit and a following bit. On the contrary, the de-rate matching algorithm enables restoration of the cancelled bits or canceling of the repeated/zero-padded bits.

**[**0058] During the rate matching, an encoded bit sequence can be represented by *d*₀, *d*₁, *d*₂,...*d*_{*N*-1} (where N is the length of the encoded sequence), and the sequence will be input into a cyclic buffer with a length *N_{cb}*. A length of the output sequence where the r-th code block is subjected to rate matching is represented by *Eᵣ*.

**[**0059] In an implementation, the determination of *Eᵣ* of may be achieved by the following codes:

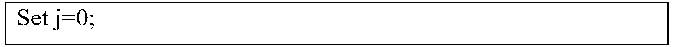

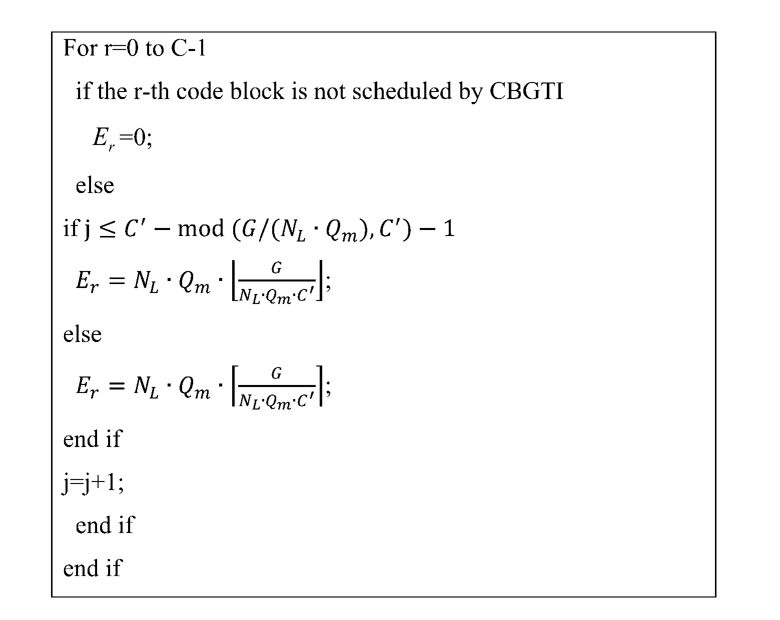

**[**0060] Herein, *N_{L}* represents the number of transmission layers where TB is mapped; *Qₘ* represents a modulation order; G represents a total number of encoded bits for transmission of the TB. If Code Block Group Transmission Information (CBGTI) is not present in DCI scheduling the TB, then C' = C; if CBGTI is present in the DCI scheduling the TB, then C' represents the number of code blocks scheduling the TB.

**[**0061] The RV number of the transmission can be expressed as *rv_{id}*, (*rv_{id} =* 0, 1, 2, or 3), and an output sequence after rate matching can be expressed as *eₖ*, k = 0, 1, 2, ..., E-1. The first bit *k*₀ in the output sequence after rate matching is associated with the *rv_{id}* and Base Graph (BG) of LDPC. BG is a core of the whole LDPC code design. Each TB code block needs to be encoded by LDPC BG 1 or LDPC BG 2. The relationship between LDPC BGs and *rv_{id}* is explained below in conjunction with Table 2.

**Table 2**

| *rv_{id}* | *k*₀ | |
|---|---|---|
| | LDPC BG1 | LDPC BG2 |
| 0 | 0 | 0 |
| 1 | $\left⌊\frac{17 {N}_{cb}}{66 {Z}_{c}}\right⌋ {Z}_{c}$ | $\left⌊\frac{13 {N}_{cb}}{50 {Z}_{c}}\right⌋ {Z}_{c}$ |
| 2 | $\left⌊\frac{33 {N}_{cb}}{66 {Z}_{c}}\right⌋ {Z}_{c}$ | $\left⌊\frac{25 {N}_{cb}}{50 {Z}_{c}}\right⌋ {Z}_{c}$ |
| 3 | $\left⌊\frac{33 {N}_{cb}}{66 {Z}_{c}}\right⌋ {Z}_{c}$ | $\left⌊\frac{43 {N}_{cb}}{50 {Z}_{c}}\right⌋ {Z}_{c}$ |

**[**0062] As illustrated in FIG. 2, for an RV with identification of 0, its corresponding LDPC BG 1 and LDPC BG 2 are both 0; and for an RV with identification of 1, 2, or 3, they each may correspond to an LDPC BG 1 and an LDPC BG 2.

**[**0063] In an implementation, the output sequence *eₖ* after rate matching can be achieved by the following codes:

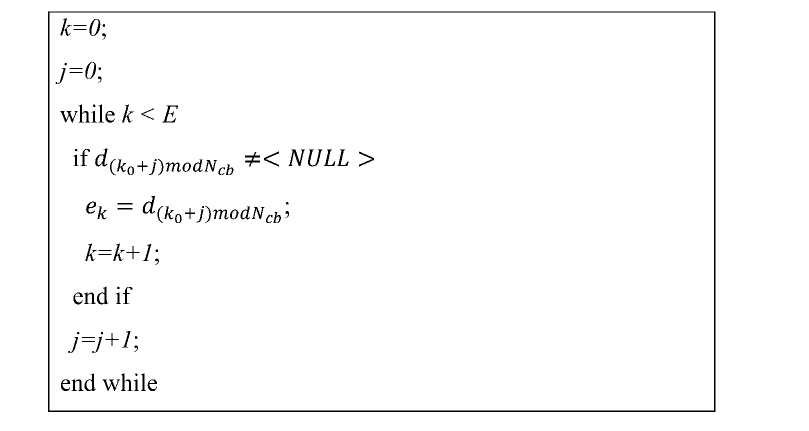

**[**0064] Encoded bits obtained after rate matching are subjected to interleaving and then modulation, that is, bit-interleaved coded modulation (BICM), which is used to ensure the performance stability of LDPC codes in high-order modulation and fading channels. A bit sequence *e*₀*, e*₁*, e*₂, *..., e*_{*E*-1} is obtained by bit selection, interleaving is performed on the bit sequence, and a sequence *f*₀*, f*₁*, f*₂*, ..., f*_{*E*-1} is obtained after the interleaving.

**[**0065] In an implementation, bit interleaving can be can be achieved by the following codes.

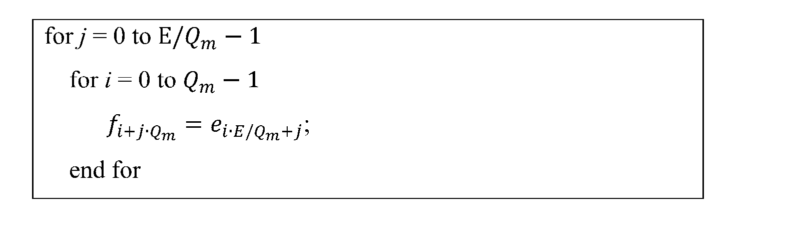

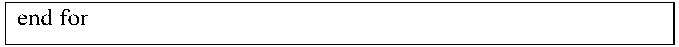

**[**0066] The specific determination of RVs during repeated transmission of PUSCH will be explained in conjunction with Table 2 below.

**Table 2**

| RV_{id} indicated by DCI scheduling PUSCH | RV_{id} applicable to an n^{th} transmission occasion (PUSCH repetition Type A) or an n^{th} actual repetition (PUSCH repetition Type B) | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**0067] As illustrated in Table 2, for PUSCH repetition type A, the terminal determines a corresponding RV based on the n^{th} transmission occasion; and for PUSCH repetition type B, the terminal determines a corresponding RV based on the number of actual repetitions.

**[**0068] For PUSCH repetition type A, since the terminal determines a corresponding RV based on the n^{th} transmission occasion, at this time if the PUSCH transmission corresponding to RV₀ is cancelled due to an unexpected situation (such as, sending PRACH), the decoding performance will deteriorate. For example, assuming that one transmission occasion is one slot, in the process of sending multiple PUSCH repetitions to a network device, the terminal device, for one of the multiple PUSCH repetitions, needs to determine a version number of the RV corresponding to the PUSCH repetition based on the time domain position of a slot where the PUSCH repetition is sent. If the slot where the PUSCH repetition is sent is cancelled, that is, the PUSCH repetition corresponding to RV of the slot is cancelled, and if the cancelled PUSCH repetition is a PUSCH repetition corresponding to RV0, the decoding performance will deteriorate.

**[**0069] For PUSCH repetition type B, since the terminal determines a corresponding RV based on the number of actual repetitions, if there is a cancelled PUSCH repetition, the RVs corresponding to the subsequent actual repetitions will change, but the network side does not know the cancellation of the PUSCH repetition. As a result, a problem that the network side and UE have inconsistent understanding of the RVs corresponding to the PUSCH repetitions in repeated transmissions of PUSCH will be caused.

**[**0070] Based on this, the embodiments of the disclosure provide a wireless communication method, a first device and a second device, which can improve the decoding performance, and enables the network side and terminal side have consistent understanding of the RV corresponding to each transmission, thereby improving the communication quality. The wireless communication method provided by the disclosure is described below.

**[**0071] FIG. 4 is a schematic flowchart of a wireless communication method 200 according to an embodiment of the disclosure. The method 200 is performed by a first device. The first device may be a sending end for repeated transmission of a physical channel, for example, a terminal device or a network device illustrated in FIG. 1.

**[**0072] As illustrated in FIG. 4, the method 200 includes the following operations.

**[**0073] In S210, the number of repetitions of a first physical channel is determined.

**[**0074] In S220, a plurality of available time domain units corresponding to the first physical channel is counted to obtain a count for each of the plurality of available time domain units.

**[**0075] In S230, sending of repeated data of the first physical channel is performed based on the number of repetitions and the count for the each available time domain unit.

**[**0076] Based on the above technical solutions, in repeated transmission of a first physical channel, a plurality of available time domain units corresponding to the first physical channel are counted to obtain a count for each of the plurality of available time domain units, and then sending of repeated data of the first physical channel is performed based on the number of repetitions and the count for each available time domain unit. That is, the available time domain unit is counted regardless of whether it is cancelled or not. Based on this, the result of the count for the available time domain units will be consistent for a network device and a terminal device, which is not only beneficial to improve the decoding performance, but also enables the network device and the terminal device to keep consistent understanding of the RV corresponding to each transmission during the repeated transmission, thereby improving the communication quality.

**[**0077] In some embodiments, the available time domain unit includes at least one consecutive slot or at least one consecutive symbol.

**[**0078] In some embodiments, the available time domain unit includes at least one symbol allocated by TDRA within a slot, and the at least one symbol is used for uplink transmission. In an implementation, for PUSCH repetition type A, the available time domain unit is at least one symbol allocated by TDRA within a slot, and the at least one symbol is used for uplink transmission. In other words, for a slot, the available time domain units are symbols allocated by TDRA within the slot, and the symbols allocated by TDRA are all uplink symbols. At this time, these uplink symbols can be the available time domain units. On the contrary, a slot is considered an unavailable slot if at least one of the symbols allocated by the TDRA within the slot is not an uplink (UL) transmission symbol. For the unavailable slot, the number of repetitions may not be counted in the physical channel repetition.

**[**0079] In some embodiments, the available time domain unit is at least one consecutive symbol, and the at least one consecutive symbol is used for uplink transmission. In an implementation, for PUSCH repetition type B, the available time domain unit is at least one consecutive symbol, and the at least one consecutive symbol is used for uplink transmission. In other words, the terminal needs to determine an invalid symbol before determining the available time domain unit, and the remaining symbols can be considered as potentially valid symbols. If the number of consecutive potentially valid symbols in a slot is greater than zero, the valid symbols can be used as an available time domain unit. Further, if the number of consecutive potentially valid symbols in a slot is greater than one, the valid symbols can be used as an available time domain unit.

**[**0080] In some embodiments, the operation S230 may include that:
**[**0081] when an initial value of the counting is one and the count for the each available time domain unit is less than or equal to the number of repetitions, the sending of the repeated data of the first physical channel is performed, otherwise the sending of the repeated data of the first physical channel is terminated; or
**[**0082] when an initial value of the counting is zero and the count for the each available time domain unit is less than or equal to a difference between the number of repetitions and one, the sending of the repeated data of the first physical channel is performed, otherwise the sending of the repeated data of the first physical channel is terminated.

**[**0083] In some implementations, the plurality of available time domain units includes a cancelled available time domain unit. Optionally, the cancelled available time domain unit includes a cancelled available time domain unit indicated by the network device, and/or a cancelled available time domain units of which cancellation is due to UE and is unknown to the network device. Optionally, the cancelled available time domain unit of which cancellation is due to UE and is unknown to the network device satisfies at least one of the following conditions: a transmission power of an available time domain unit being limited; or there being a first signal to be sent, where a priority of the first signal being higher than a priority of the physical channel. Optionally, the first signal includes at least one of: physical uplink control channel (PUCCH), PRACH, and Sounding Reference Signal (SRS).

**[**0084] As an example of the disclosure, for a single cell operation with two uplink carriers or an operation with carrier aggregation, if a total UE transmission power of a PUSCH, PUCCH, PRACH or SRS transmission on a serving cell within one frequency range exceeds a certain threshold in an available time domain unit i, the terminal may allocate power to the PUSCH/PUCCH/PRACH/SRS transmission according to the following priority order (in descending order), such that in each symbol of the available time domain unit i, the total transmission power for transmission on the serving cell within the frequency range is less than or equal to the threshold for the frequency range. PRACH has a higher priority, so in the process of repeated transmission of PUSCH, when UE temporarily needs to transmit PRACH on the available time domain unit for transmitting a PUSCH, the repeated transmission of the PUSCH needs to be cancelled due to power limitation. This special situation where cancellation of PUSCH is due to UE is unknown to the network side. Optionally, when the total transmission power of the serving cell within the frequency range in the available time domain unit i is determined, it does not include the power sent after the available time domain unit i. The total UE transmission power in each symbol in the available time domain unit may be the sum of the linear values of the UE transmission power of PUSCH, PUCCH, PRACH and SRS in the symbol.

**[**0085] In some embodiments, the number of the plurality of available time domain units is greater than or equal to the number of available time domain units on which actual sending of the repeated data is performed.

**[**0086] FIG. 5 is a schematic diagram of counting the number of repetitions based on actual PUSCH repetitions according to an embodiment of the disclosure.

**[**0087] As illustrated in FIG. 5, assuming that during the repeated transmission of PUSCH, when UE temporarily needs to transmit PRACH on an available time domain unit for transmitting a PUSCH, since the PRACH has a higher priority, the repeated transmission of the PUSCH needs to be cancelled due to power limitation. This special situation where cancellation of PUSCH is due to UE is unknown to the network side. In order to ensure that the number of the actual repetitions of PUSCH can reach the number of repetitions configured by the network side, the UE can delay the sending of PUSCH repetition. In this case, the UE delays the sent PUSCH repetition, and counts the number of repetitions based on the actual PUSCH repetitions, so as to ensure that the number of actual repetitions can reach the number of repetitions configured by the network, thereby realizing better coverage performance. However, this will also lead to that the network device and UE have inconsistent understanding of the number of repetitions, and thus result in the network device failing to receive correctly.

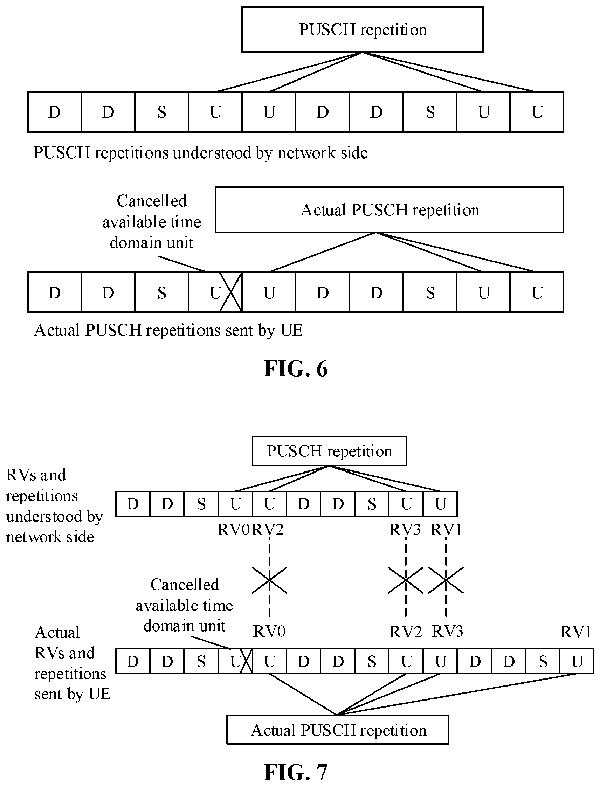

**[**0088] FIG. 6 is a schematic diagram of counting the number of repetitions based on available time domain units according to an embodiment of the disclosure.

**[**0089] As illustrated in FIG. 6, for a cancelled PUSCH repetition of which cancellation is caused by UE and is unknown to the network side, it is still necessary to perform counting of the repetitions. That is, the number of repetitions is counted based on the available time domain units, and at this time, the number of PUSCH repetitions is smaller than the number of repetitions configured by the network. In other words, the counting of repetitions is based on the counting for all of the available time domain units (including a potentially cancelled available time domain unit(s) of which cancellation is caused by the UE and is unknown to the network side), which avoids the problem that the network side and the UE have inconsistent understanding of the number of repetitions and the available time domain units used for repeated transmission due to the potentially cancelled available time domain units.

**[**0090] By comparison between FIG. 5 and FIG. 6, the manner of counting the number of repetitions provided by the disclosure can ensure that the count results for available time domain resources by the network device and UE are consistent, which is not only beneficial to improve the decoding performance, but also is beneficial for the network device and the terminal device to keep consistent understanding of the RV for each transmission in repeated transmission, thereby improving the communication quality.

**[**0091] In some embodiments, the operation S230 may include the following operations.

**[**0092] An RV applicable to each of the plurality of available time domain units is determined based on the count for each available time domain unit.

**[**0093] The sending of the repeated data of the first physical channel is performed based on the number of repetitions and the RV applicable to each available time domain unit.

**[**0094] In short, the first device counts the number of repetitions (denoted as n^{th}) based on the plurality of available time domain units, and then calculates the RV based on the n^{th} available time domain unit.

**[**0095] In some implementations, the RV applicable to each available time domain unit is determined in a manner of a cycling order of RV identification (RV_{id}) 0, 2, 3, 1 based on an RV applicable to a first available time domain unit of the plurality of available time domain units and the count for each available time domain unit.

**[**0096] In some implementations, the RV of the first available time domain unit is an RV_{id} indicated by DCI for scheduling a PUSCH.

**[**0097] In some implementations, the RV applicable to each of the plurality of the available time domain units is determined according to the following table.

| RV_{id} of the first available time domain unit | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**0098] The mod represents modulo operation.

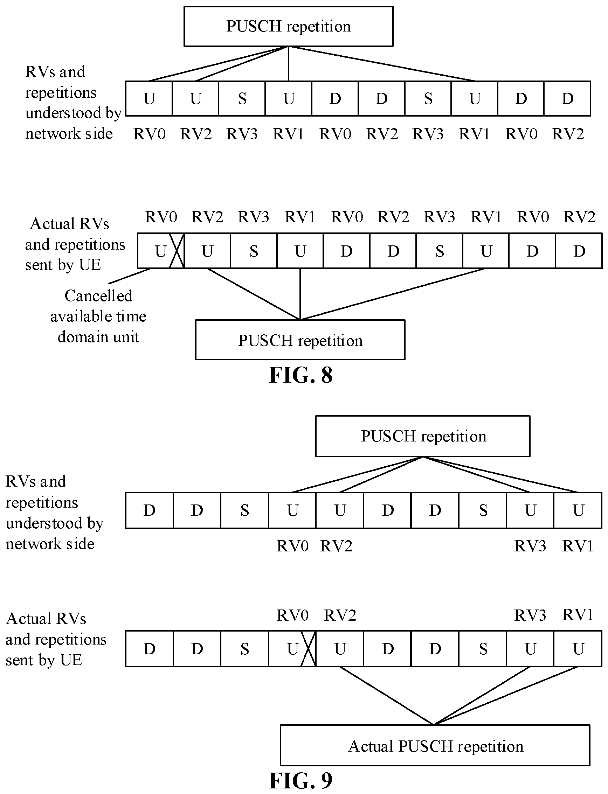

**[**0099] The influence of different counting manners of repetitions on the determined RVs will be explained in conjunction with FIG. 7 and FIG. 8 below.

**[**00100] FIG. 7 is a schematic diagram of determination of RV based on a count for actual PUSCH repetitions according to an embodiment of the disclosure.

**[**00101] As illustrated in FIG. 7, if the number of repetitions is counted based on the actual PUSCH repetitions, the corresponding RVs need to be determined based on the count for the actual PUSCH repetitions. Assuming that the time domain resource of an actual PUSCH repetition is a slot, there are four actual PUSCH repetitions as illustrated in FIG. 7. If there is no cancelled actual PUSCH repetition of which cancellation is caused by UE and is unknown to the network device in the four actual PUSCH repetitions, RV of a first actual PUSCH repetition is RV0, RV of a second actual PUSCH repetition is RV2, RV of a third actual PUSCH repetition is RV3, and RV of a fourth actual PUSCH repetition is RV1. However, if there is a cancelled actual PUSCH repetition of which cancellation is caused by UE and is unknown to the network device in the four actual PUSCH repetitions, for example, assuming that the first actual PUSCH repetition in the four actual PUSCH repetitions is cancelled due to UE and the cancellation is not known by the network device, the first actual PUSCH repetition is delayed. The terminal device determines corresponding RVs based on the count for actual PUSCH repetitions, and at this time, the RV of the first actual PUSCH repetition is RV0, but the network device considers the RV of the first actual PUSCH repetition to be RV2, and the second actual PUSCH repetition, the third actual PUSCH repetition, the fourth actual PUSCH repetition as well as the first actual PUSCH repetition are sent, that is, the network side and UE have inconsistent understanding of RVs.

**[**00102] FIG. 8 is a schematic diagram of determination of RV based on transmission occasions according to an embodiment of the disclosure.

**[**00103] As illustrated in FIG. 8, if the number of repetitions is counted based on transmission occasions, the corresponding RVs need to be determined based on the count for the transmission occasions. Assuming that a transmission occasion is a slot, there are 10 slots as illustrated in FIG. 8, where RV of a first slot is RV0, RV of a second slot is RV2, RV of a third slot is RV3, RV of a fourth slot is RV1, and so on, and RV of a tenth slot is RV2. As illustrated in FIG. 8, assuming that the terminal can perform repeated transmission on four slots (i.e., the first slot, the second slot, the fourth slot and the eighth slot). If there is no cancelled slot of which cancellation is caused by UE and is unknown to the network device in the four slots, the RV of the first slot is RV0, the RV of the second slot is RV2, the RV of the fourth slot is RV1, and the RV of the eighth slot is RV1. However, if there is a cancelled slot of which cancellation is caused by UE and unknown to the network device in the four slots, for example, assuming that the first slot of the four slots is cancelled due to UE and the cancellation is not known by the network device, the RVs of the second available slot, third available slot and fourth available slot are sent. In this case, there may be no RV capable of self-decoding for partial frame structure during the actual transmission, which may lead to degradation of decoding performance.

**[**00104] FIG. 9 is a schematic diagram of determination of RV based on a count for available time domain units according to an embodiment of the disclosure.

**[**00105] As illustrated in FIG. 9, if the number of repetitions is counted based on available time domain units, the corresponding RVs need to be determined based on the count for the available time domain units. Assuming that an available time domain unit is a slot, there are four available slots as illustrated in FIG. 9. If there is no cancelled slot of which cancellation is caused by UE and unknown to the network device in the four slots, RV of a first slot is RV0, RV of a second slot is RV2, RV of a third slot is RV3, and RV of a fourth slot is RV1. If there is a cancelled slot of which cancellation is caused by UE and unknown to the network device in the four slots, for example, assuming that the first slot of the four slots is cancelled due to UE and the cancellation is not known by the network device, the terminal device determines corresponding RVs based on the count for the available slots. At this time, the RV of the first actual PUSCH repetition is RV2, the RV of the second actual PUSCH repetition is RV3, and the RV of the third actual PUSCH repetition is RV1. Based on this, the count result of the available time domain resource will be consistent for a network device and a terminal device, which is not only beneficial to improve the decoding performance, but also is beneficial for the network device and the terminal device to keep consistent understanding of the RVs for each transmission in repeated transmission, thereby improving the communication quality.

**[**00106] In some embodiments, the first physical channel includes a PUSCH, and the method 200 may further include the following operation.

**[**00107] First indication information is received by the first device from a network device. The first indication information is configured to indicate a count for available time domain units comprising a cancelled available time domain unit(s).

**[**00108] In other words, the first device is a terminal device, and the terminal device receives the first indication information from the network device.

**[**00109] In some embodiments, the first physical channel includes a PDSCH, and the method 200 may further include the following operation.

**[**00110] First indication information is sent by the first device to a terminal device. The first indication information is configured to a count for available time domain units comprising a cancelled available time domain unit(s).

**[**00111] In other words, the first device is a network device, and the network device sends the first indication information to the terminal device.

**[**00112] Alternatively, the first physical channel may also be another physical channel, which is not specifically limited in the disclosure.

**[**00113] The preferred embodiments of the disclosure have been described in detail with reference to the drawings, but the disclosure is not limited to the specific details of the above embodiments. Various simple modifications can be made to the technical solution of the disclosure within the scope of the technical conception of the disclosure, all of which fall within the scope of protection of the disclosure. For example, each of the specific technical features described in the above specific embodiments may be combined in any suitable manner without conflict with each other, and various possible combinations are not further described in the disclosure in order to avoid unnecessary repetition. For another example, different embodiments of the disclosure can be combined arbitrarily, and they should also be regarded as the contents disclosed in the disclosure as long as they do not violate the idea of the disclosure.

**[**00114] It should be understood that the magnitude of serial numbers of the foregoing processes do not mean execution sequences in various method embodiments of the disclosure. The execution sequences of the processes should be determined according to functions and internal logics of the processes, and should not be construed as any limitation to implementation processes of the embodiments of disclosure. In addition, in embodiments of the disclosure, the terms "downlink" and "uplink" are used to denote a transmission direction of the signal or data. The term "downlink" is used to denote the transmission direction of the signal or data as a first direction from a station to UE of the cell, and the term "uplink" is used to denote the transmission direction of the signal or data as a second direction from UE of the cell to the station, for example, "downlink signal" means that the transmission direction of the signal is the first direction. In addition, in embodiments of the disclosure, the term "and/or" is only an association relationship describing associated objects and represents that there are three relationships. Specifically, A and/or B may represent three conditions: independent existence of A, existence of both A and B and independent existence of B. In addition, character "/" used herein usually represents that the associated objects before and after form an "or" relationship.

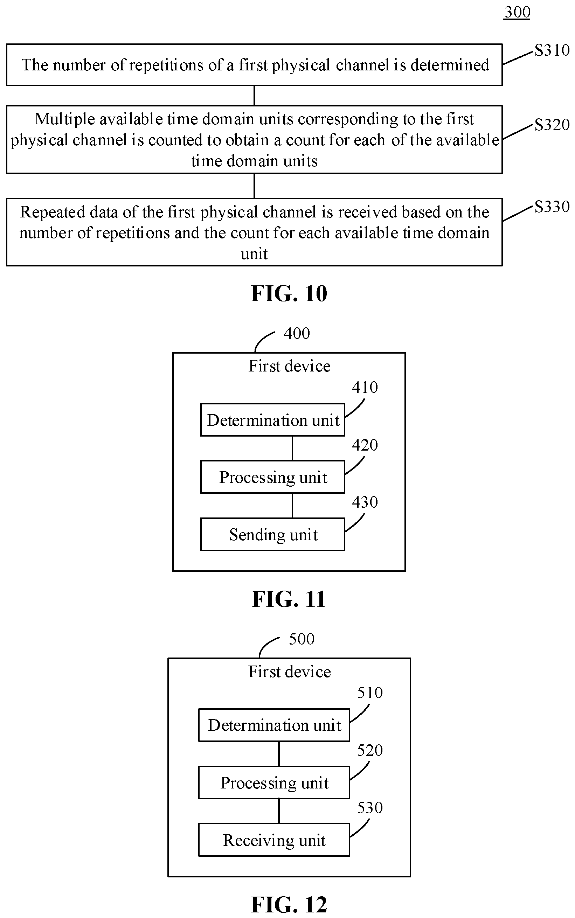

**[**00115] The wireless communication method according to the embodiments of the disclosure has been described in detail from the perspective of a first device with reference to FIG. 4 to FIG. 9, and the wireless communication method according to the embodiments of the disclosure will be described from a perspective of a second device with reference to FIG. 10 below.

**[**00116] FIG. 10 is another schematic flow chart of a wireless communication method 300 according to an embodiment of the disclosure. The method 300 may be performed by a second device, which is a receiving end for repeated transmission of a physical channel, for example, the network device or terminal device illustrated in FIG. 1.

**[**00117] As illustrated in FIG. 10, the method 300 may include the following operations.

**[**00118] In S310, the number of repetitions of a first physical channel is determined.

**[**00119] In S320, a plurality of available time domain units corresponding to the first physical channel is counted to obtain a count for each of the plurality of available time domain units.

**[**00120] In S330, reception of repeated data of the first physical channel is performed based on the number of repetitions and the count for the each available time domain unit.

**[**00121] In some embodiments, the operation S330 may include that:
**[**00122] when an initial value of the counting is one and the count for the each available time domain unit is less than or equal to the number of repetitions, the reception of the repeated data of the first physical channel is performed, otherwise the reception of the repeated data of the first physical channel is terminated, or
**[**00123] when an initial value of the counting is zero and the count for the each available time domain unit is less than or equal to a difference between the number of repetitions and one, the reception of the repeated data of the first physical channel is performed, otherwise the reception of the repeated data of the first physical channel is terminated.

**[**00124] In some implementations, the plurality of available time domain units include at least one cancelled available time domain unit.

**[**00125] In some embodiments, the cancelled available time domain unit includes a cancelled available time domain units indicated by the network device, and/or a cancelled available time domain units of which cancellation is due to UE and is unknown to the network device.

**[**00126] The cancelled available time domain unit of which cancellation is due to UE and is unknown to the network device satisfies at least one of the following conditions that:
**[**00127] a transmission power of an available time domain unit is limited, or
**[**00128] there is a first signal to be sent, and a priority of the first signal is higher than a priority of the physical channel.

**[**00129] In some embodiments, the first signal includes at least one of: PUCCH, PRACH, or SRS.

**[**00130] In some embodiments, the number of the plurality of available time domain units is greater than or equal to the number of available time domain units on which actual sending of the repeated data is performed.

**[**00131] In some embodiments, the operation S330 may include the following operations.

**[**00132] A RV applicable to each of the plurality of available time domain units is determined based on the count for the each available time domain unit.

**[**00133] Reception of the repeated data of the first physical channel is performed based on the number of repetitions and the RV applicable to each available time domain unit.

**[**00134] In some embodiments, the RV applicable to each of the plurality of available time domain units is determined in a manner of a cycling order of RV identification (RV_{id}) 0, 2, 3, 1 based on an RV applicable to a first available time domain unit of the plurality of available time domain units and the count for each available time domain unit.

**[**00135] In some embodiments, the RV of the first available time domain unit is an RV_{id} indicated by DCI for scheduling a PUSCH.

**[**00136] In some implementations, the RV applicable to each of the plurality of available time domain units is determined according to the following table.

| RV_{id} of the first available time domain unit | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**00137] The mod represents a modulo operation.

**[**00138] In some embodiments, the first physical channel includes a PUSCH, and the method 300 may further include the following operation.

**[**00139] First indication information is sent by the second device to a terminal device. The first indication information is configured to indicate a count for available time domain unit including a cancelled available time domain unit(s).

**[**00140] In some embodiments, the first physical channel includes a PDSCH, and the method 300 may further include the following operation.

**[**00141] First indication information is received by the second device from a network device. The first indication information is configured to indicate a count for available time domain units including a cancelled available time domain unit(s).

**[**00142] In some embodiments, the available time domain unit includes at least one consecutive slot or at least one consecutive symbol.

**[**00143] In some embodiments, the available time domain unit includes at least one symbol allocated by TDRA within a slot, and the at least one symbol is used for uplink transmission.

**[**00144] In some embodiments, the available time domain unit comprises at least one consecutive symbol, and the at least one consecutive symbol is used for uplink transmission.

**[**00145] It should be understood that the operations in the method 300 may refer to the corresponding operations in the method 200, for example, the corresponding operations or solutions in the method 300 for determining a position offset factor and/or a RV may refer to the corresponding operations or solutions in the method 200, which will not be repeated here for sake of brevity.

**[**00146] Embodiments of methods of the disclosure are described in detail above with reference to FIG. 1 to FIG. 10. Embodiments of devices of the disclosure are described in detail below with reference to FIG. 11 to FIG. 14.

**[**00147] FIG. 11 is a schematic block diagram of a first device 400 according to an embodiment of the disclosure.

**[**00148] As illustrated in FIG. 11, the first device 400 includes a determination unit 410, a processing unit 420, and a sending unit 430.

**[**00149] The determination unit 410 is configured to determine the number of repetitions of a first physical channel.

**[**00150] The processing unit 420 is configured to count a plurality of available time domain units corresponding to the first physical channel to obtain a count for each of the plurality of available time domain units.

**[**00151] The sending unit 430 is configured to perform sending of repeated data of the first physical channel based on the number of repetitions and the count for each available time domain unit.

**[**00152] In some embodiments, the sending unit 430 is specifically configured to: when an initial value of the counting is one and the count for the each available time domain unit is less than or equal to the number of repetitions, perform sending of the repeated data of the first physical channel, otherwise terminate the sending of the repeated data of the first physical channel; or, when an initial value of the counting is zero and the count for the each available time domain unit is less than or equal to a difference between the number of repetitions and one, perform sending of the repeated data of the first physical channel, otherwise terminate the sending of the repeated data of the first physical channel.

**[**00153] In some implementations, the plurality of available time domain units include at least one cancelled available time domain unit.

**[**00154] In some embodiments, the cancelled available time domain unit includes a cancelled available time domain units indicated by the network device, and/or a cancelled available time domain units of which cancellation is due to UE and is unknown to the network device.

**[**00155] In some embodiments, the cancelled available time domain unit of which cancellation is due to UE and is unknown to the network device satisfies at least one of the following conditions that:
**[**00156] a transmission power of an available time domain unit is limited, or
**[**00157] there is a first signal to be sent, and a priority of the first signal is higher than a priority of the physical channel.

**[**00158] In some embodiments, the first signal includes at least one of: PUCCH, PRACH, or SRS.

**[**00159] In some embodiments, the number of the plurality of available time domain units is greater than or equal to the number of available time domain units on which actual sending of the repeated data is performed.

**[**00160] In some embodiments, the sending unit 430 is specifically configured to: determine a RV applicable to each of the plurality of available time domain units based on the count for each available time domain unit, and perform sending of the repeated data of the first physical channel based on the number of repetitions and the RV applicable to each available time domain unit.

**[**00161] In some embodiments, the sending unit 430 is specifically configured to: determine the RV applicable to each of the plurality of available time domain units in a manner of a cycling order of RV identification (RV_{id}) 0, 2, 3, 1 based on an RV applicable to a first available time domain unit of the plurality of available time domain units and the count for each available time domain unit.

**[**00162] In some embodiments, the RV of the first available time domain unit is an RV_{id} indicated by DCI for scheduling a PUSCH.

**[**00163] In some implementations, the sending unit 430 is specifically configured to determine the RV applicable to each of the plurality of available time domain units according to the following table.

| RV_{id} of the first | RV_{id} applicable to an n^{th} available time domain unit | | | |
|---|---|---|---|---|
| available time domain unit | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**00164] The mod represents modulo operation.

**[**00165] In some embodiments, the first physical channel includes a PUSCH, and the sending unit 430 is further configured to: perform reception of first indication information from a network device. The first indication information is configured to indicate a count for available time domain units including a cancelled available time domain unit.

**[**00166] In some embodiments, the first physical channel includes a PDSCH, and the sending unit 430 is further configured to: send indication information to a terminal device. The first indication information is configured to indicate r a count for available time domain units including a cancelled available time domain unit.

**[**00167] In some embodiments, the available time domain unit includes at least one consecutive slot or at least one consecutive symbol.

**[**00168] In some embodiments, the available time domain unit includes at least one symbol allocated by TDRA within a slot, and the at least one symbol is used for uplink transmission.

**[**00169] In some embodiments, the available time domain unit comprises at least one consecutive symbol, and the at least one consecutive symbol is used for uplink transmission.

**[**00170] It should be understood that the device embodiments may correspond the method embodiments, and the similar descriptions thereof may be made with reference to the method embodiments. Specifically, the first device 400 illustrated in FIG. 11 may correspond to a respective entity for performing the method 200 in the embodiments of the disclosure, and the foregoing and other operations and/or functions of various units in the first device 400 are used for implementing the corresponding processes in various methods illustrated in FIG. 4, and not be repeated herein for sake of brevity.

**[**00171] FIG. 12 is a schematic block diagram of a second device 500 according to an embodiment of the disclosure.

**[**00172] As illustrated in FIG. 12, the second device 500 includes a determination unit 510, a processing unit 520, and a receiving unit 530.

**[**00173] The determination unit 510 is configured to determine a number of repetitions of a first physical channel.

**[**00174] The processing unit 520 is configured to count a plurality of available time domain units corresponding to the first physical channel to obtain a count for each of the plurality of available time domain units.

**[**00175] The receiving unit 530 is configured to receive repeated data of the first physical channel based on the number of repetitions and the count for the each available time domain unit.

**[**00176] In some embodiments, the receiving unit 530 is specifically configured to: when an initial value of the counting is one and the count for the each available time domain unit is less than or equal to the number of repetitions, perform reception of the repeated data of the first physical channel, otherwise terminate the reception of the repeated data of the first physical channel is terminated; or, when an initial value of the counting is zero and the count for the each available time domain unit is less than or equal to a difference between the number of repetitions and one, performing reception of the repeated data of the first physical channel, otherwise terminate the reception of the repeated data of the first physical channel.

**[**00177] In some implementations, the plurality of available time domain units include at least one cancelled available time domain unit.

**[**00178] In some embodiments, the cancelled available time domain unit includes a cancelled available time domain units indicated by the network device, and/or a cancelled available time domain units of which cancellation is due to UE and is unknown to the network device.

**[**00179] In some embodiments, the cancelled available time domain unit of which cancellation is due to UE and is unknown to the network device satisfies at least one of the following conditions that:
**[**00180] a transmission power of an available time domain unit is limited, or
**[**00181] there is a first signal to be sent, and a priority of the first signal is higher than a priority of the physical channel.

**[**00182] In some embodiments, the first signal includes at least one of: PUCCH, PRACH, or SRS.

**[**00183] In some embodiments, the number of the plurality of available time domain units is greater than or equal to the number of available time domain units on which actual sending of the repeated data is performed.

**[**00184] In some embodiments, the receiving unit 530 is specifically configured to: determine a RV applicable to each of the plurality of available time domain units based on the count for each available time domain unit, and perform reception of the repeated data of the first physical channel based on the number of repetitions and the RV applicable to each available time domain unit.

**[**00185] In some embodiments, the receiving unit 530 is specifically configured to: determine the RV applicable to each of the plurality of available time domain units in a manner of a cycling order of RV identification (RV_{id}) 0, 2, 3, 1 based on an RV applicable to a first available time domain unit of the plurality of available time domain units and the count for each available time domain unit.

**[**00186] In some embodiments, the RV of the first available time domain unit is an RV_{id} indicated by DCI for scheduling a PUSCH.

**[**00187] In some embodiments, the receiving unit 530 is specifically configured to: determine the RV applicable to each of the plurality of available time domain units according to the following table.

| RV_{id} of the first available time domain unit | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**00188] The mod represents modulo operation.

**[**00189] In some embodiments, the first physical channel includes a PUSCH, and the receiving unit 530 is further configured to: send first indication information to a terminal device. The first indication information is configured to indicate a count for available time domain units including a cancelled available time domain unit.

**[**00190] In some embodiments, the first physical channel includes a PDSCH, and the receiving unit 530 is further configured to: receive first indication information from a network device. The first indication information is configured to indicate a count of the available time domain units including a cancelled available time domain unit.

**[**00191] In some embodiments, the available time domain unit includes at least one consecutive slot or at least one consecutive symbol.

**[**00192] In some embodiments, the available time domain unit includes at least one symbol allocated by TDRA within a slot, and the at least one symbol is used for uplink transmission.

**[**00193] In some embodiments, the available time domain unit comprises at least one consecutive symbol, and the at least one consecutive symbol is used for uplink transmission.

**[**00194] It should be understood that the device embodiments may correspond to the method embodiments, and similar descriptions thereof may be made with reference to the method embodiments. Specifically, the second device 500 illustrated in FIG. 12 may correspond to a respective entity for performing the method 300 in the embodiments of the disclosure, and the foregoing and other operations and/or functions of various units in the second device 500 are used for implementing the corresponding processes in various methods illustrated in FIG. 10, which will not be repeated herein for the sake of brevity.

**[**00195] The communication device in the embodiments of the disclosure is described above from the perspective of functional modules with reference to the drawings. It should be understood that the functional modules may be implemented in the form of hardware, or by instructions in form of software, or by a combination of hardware and software modules. Specifically, various operations of the method embodiments in the embodiments of the disclosure can be completed by the integrated logic circuits in the form of hardware in a processor and/or by instructions in the form of software, and the operations of the method disclosed in combination with the embodiments of the disclosure can be directly embodied as being executed by a hardware decoding processor, or by a combination of hardware and software modules in the decoding processor. Optionally, the software modules may be located in a random access memory, a flash memory, a read-only memory, a programmable read-only memory or an electrically erasable programmable memory, a register and other storage media mature in the art. The storage medium is located in the memory, and the processor reads information in the memory and completes the operations of the above method embodiments in conjunction with hardware.

**[**00196] For example, the above-described determination unit 410, processing unit 420, determination unit 510, and processing unit 520 may be implemented by a processor, and the above-described sending unit 430 and receiving unit 530 may be implemented by a transceiver.

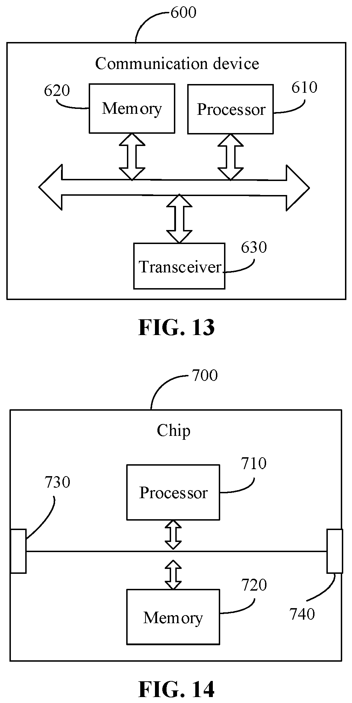

**[**00197] FIG. 13 is a schematic block diagram of a communication device according to an embodiment of the disclosure.

**[**00198] As illustrated in FIG. 13, the communication device 600 may include a processor 610.

**[**00199] The processor 610 may call and run a computer program from a memory to execute the methods of the embodiments of the disclosure.

**[**00200] As illustrated in FIG. 13, the communication device 600 may further include a memory 620.

**[**00201] The memory 620 is configured to store indication information, and to store codes, instructions and the like that are executed by the processor 610. The processor 610 may call and run a computer program from the memory 620 to implement the method in the embodiments of the disclosure. The memory 620 may be a separate device independent of the processor 610 or may be integrated in the processor 610.

**[**00202] As illustrated in FIG. 13, the communication device 600 may further include a transceiver 630.

**[**00203] The processor 610 may control the transceiver 630 to communicate with other devices, and specifically, the transceiver 630 may send information or data to other devices or receive information or data sent by other devices. The transceiver 630 may include a transmitter and a receiver. The transceiver 630 may further include antennas, the number of which may be one or more.

**[**00204] It should be understood that the various components in the communication device 600 are connected via a bus system. In addition to a data bus, the bus system further includes a power bus, a control bus and a status signal bus.

**[**00205] It should also be understood that the communication device 600 may be a terminal device in the embodiments of the disclosure, and the communication device 600 may implement the corresponding processes implemented by the terminal device in the various methods of the embodiments of the disclosure. That is, the communication device 600 in the embodiments of the disclosure may correspond to the first device 400 in the embodiments of the disclosure, and may correspond to a respective entity for performing the method 200 according to the embodiments of the disclosure, which will not be repeated herein for brevity. Similarly, the communication device 600 may be a network device in the embodiments of the disclosure, and the communication device 600 may implement the corresponding processes implemented by the network device in various methods of the embodiments of the disclosure. That is, the communication device 600 in the embodiments of the disclosure may correspond to the second device 500 of the embodiments of the disclosure and may and may correspond to a respective entity for performing the method 200 according to the embodiments of the disclosure, which will not be repeated herein for brevity.

**[**00206] In addition, an embodiment of the disclosure further provides a chip.

**[**00207] For example, the chip may be an integrated circuit chip with signal processing capability, and can implement or execute various methods, operations, and logic diagrams disclosed in embodiments of the disclosure. The chip may also be referred as a system-level chip, a system chip, a chip system, a system-on-chip, or the like. Optionally, the chip can be applied to various communication devices so that the communication devices installed with the chip can execute the various methods, operations and logic block diagrams disclosed in the embodiments of the disclosure.

**[**00208] FIG. 14 is a schematic block diagram of a chip 700 according to an embodiment of the disclosure.

**[**00209] As illustrated in FIG. 14, the chip 700 includes a processor 710.

**[**00210] The processor 710 may call and run a computer program from memory to implement the methods in the embodiments of the disclosure.

**[**00211] As illustrated in FIG. 14, the chip 700 may further include a memory 720.

**[**00212] The processor 710 may call and run a computer program from the memory 720 to implement the methods in the embodiments of the disclosure. The memory 720 may be used for storing indication information, or may further be used for storing codes, instructions and the like that are executed by the processor 710. The memory 720 may be a separate device independent of processor 710 or may be integrated in the processor 710.

**[**00213] As illustrated in FIG. 14, the chip 700 may further include an input interface 730.

**[**00214] The processor 710 may control the input interface 730 to communicate with other devices or chips. Specifically, the processor may acquire information or data sent by other devices or chips.

**[**00215] As illustrated in FIG. 14, the chip 700 may further include an output interface 740.

**[**00216] The processor 710 may control the output interface 740 to communicate with other devices or chips. Specifically, the processor may acquire information or data sent by other devices or chips.

**[**00217] It should be understood that the chip 700 may be applied to the network device in the embodiments of the disclosure, and the chip may implement the corresponding processes implemented by the first device in various methods in the embodiments of the disclosure, and further implement the corresponding processes implemented by the second device in various methods in the embodiments of the disclosure, which will not be repeated herein for brevity.

**[**00218] It should also be understood that the various components in the chip 700 are connected via a bus system. In addition to a data bus, the bus system further includes a power bus, a control bus, and a status signal bus.

**[**00219] The processor referred to above may include, but is not limited to, a general purpose processor, a digital signal processor (DSP), an application specific integrated circuit (ASIC), a field programmable gate array (FPGA) or another programmable logic device, a discrete gate or a transistor logic device, or a discrete hardware component.

**[**00220] The processor may be configured to implement or perform the methods, operations and logical block diagrams disclosed in the embodiments of the disclosure. The operations of the methods disclosed in combination with the embodiments of the disclosure can be directly embodied as being executed by a hardware decoding processor, or by a combination of hardware and software modules in the decoding processor. The software modules may be located in a storage medium, such as a random access memory, a flash memory, a read-only memory, a programmable read-only memory or an electrically erasable programmable memory, a register and other storage media mature in the art. The storage medium is located in the memory, and the processor reads information in the memory and completes the operations of the above methods in conjunction with its hardware.

**[**00221] The memory referred to above includes, but is not limited to: a volatile memory and/or a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), and is used as an external cache. By way of example, but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a Synch link DRAM (SLDRAM), and a Direct Rambus RAM (DR RAM).

**[**00222] It should be noted that the memory herein is intended to include these and any other suitable types of memory.

**[**00223] An embodiment of the disclosure further provides a computer- readable storage medium used to store a computer program. The computer-readable storage medium stores one or more programs including instructions that, when executed by a portable electronic device including multiple application programs, cause the portable electronic device to perform the method 200 or 300 according to the embodiments. Optionally, the computer-readable storage medium may be applied to the first device in the embodiments of the disclosure, and the computer program causes a computer to perform the corresponding processes implemented by the first device in various methods in the embodiments of the disclosure, which will not be repeated herein for brevity. Optionally, the computer-readable storage medium may be applied to the second device in the embodiments of the disclosure, and the computer program causes a computer to perform the corresponding processes implemented by the second device in various methods in the embodiments of the disclosure, which will not be repeated herein for brevity.

**[**00224] An embodiment of the disclosure further provides a computer program product including a computer program. Optionally, the computer program product may be applied to the first device in the embodiments of the disclosure, and the computer program causes a computer to perform the corresponding processes implemented by the first device in various methods in the embodiments of the disclosure, which will not be repeated herein for brevity. Optionally, the computer program product may be applied to the second device in the embodiments of the disclosure, and the computer program causes a computer to perform the corresponding processes implemented by the second device in various methods in the embodiments of the disclosure, which will not be repeated herein for brevity.

**[**00225] An embodiment of the disclosure further provides a computer program. The computer program, when executed by a computer, causes the computer to execute the method 200 or 300 in the illustrated embodiments. Optionally, the computer program may be applied to the first device in the embodiments of the disclosure. The computer program, when running on a computer, causes the computer to perform the corresponding processes implemented by the first device in various methods in the embodiments of the disclosure, which will not be repeated herein for brevity. Optionally, the computer program may be applied to the second device in the embodiments of the disclosure. The computer program, when running on a computer, causes the computer to perform the corresponding processes implemented by the second device in various methods in the embodiments of the disclosure, which will not be repeated herein for brevity.

**[**00226] An embodiment of the disclosure further provides a communication system, which may include the above-described terminal device and network device to form the communication system 100 illustrated in FIG. 1, which will not be described herein for brevity. It should be understood that the terms "system" herein can also be referred to as "network management architecture" or "network system".

### [00227] Additional examples

**[**00228] In example 1, there is provided a wireless communication method, including:
**[**00229] determining a number of repetitions of a first physical channel;
**[**00230] counting a plurality of available time domain units corresponding to the first physical channel to obtain a count for each of the plurality of available time domain units; and
**[**00231] performing sending of repeated data of the first physical channel based on the number of repetitions and the count for the each available time domain unit.

**[**00232] In example 2, the method of example 1, wherein performing sending of the repeated data of the first physical channel based on the number of repetitions and the count for the each available time domain unit includes:
**[**00233] when an initial value of the counting is one and the count for the each available time domain unit is less than or equal to the number of repetitions, performing the sending of the repeated data of the first physical channel, otherwise, terminating the sending of the repeated data of the first physical channel; or
**[**00234] when an initial value of the counting is zero and the count for the each available time domain unit is less than or equal to a difference between the number of repetitions and one, performing the sending of the repeated data of the first physical channel, otherwise, terminating the sending of the repeated data of the first physical channel.

**[**00235] In example 3, the method of example 1 or 2, wherein the plurality of available time domain units includes a cancelled available time domain unit.

**[**00236] In example 4, the method of example 3, wherein the cancelled available time domain unit includes: a cancelled available time domain unit indicated by a network device; and/or a cancelled available time domain unit of which cancellation is due to user equipment (UE) and is unknown to the network device.

**[**00237] In example 5, the method of example 4, wherein the cancelled available time domain unit of which cancellation is due to the UE and is unknown to the network device satisfies at least one of the following conditions:
**[**00238] a transmission power of an available time domain unit being limited; or
**[**00239] there being a first signal to be sent, and a priority of the first signal being higher than a priority of the physical channel.

**[**00240] In example 6, the method of example 5, wherein the first signal includes at least one of: Physical Uplink Control Channel (PUCCH), Physical Random Access Channel (PRACH) or Sounding Reference Signal (SRS).

**[**00241] In example 7, the method of any one of examples 1 to 6, wherein a number of the plurality of available time domain units is greater than or equal to a number of available time domain units on which actual sending of the repeated data is performed.

**[**00242] In example 8, the method of any one of examples 1 to 7, wherein performing the sending of the repeated data of the first physical channel based on the number of repetitions and the count for the each available time domain unit, includes:
**[**00243] determining a redundancy version (RV) applicable to the each available time domain unit based on the count for the each available time domain unit; and
**[**00244] performing the sending of the repeated data of the first physical channel based on the number of repetitions and the RV applicable to the each available time domain unit.

**[**00245] In example 9, the method of example 8, wherein determining the RV applicable to the each of available time domain unit based on the count for the each available time domain unit, includes:
**[**00246] determining the RV applicable to the each available time domain unit, in a manner of a cycling order of RV identification (RV_{id}) 0, 2, 3, 1 based on an RV applicable to a first available time domain unit of the plurality of available time domain units and the count for the each available time domain unit.

**[**00247] In example 10, the method of example 9, wherein the RV of the first available time domain unit is an RV_{id} indicated by Downlink Control Information (DCI) for scheduling a Physical Uplink Shared Channel (PUSCH).

**[**00248] In example 11, the method of example 9, wherein determining the RV applicable to the each available time domain unit, in the manner of the cycling order of the RV identification 0, 2, 3, 1 based on the RV applicable to the first available time domain unit of the plurality of available time domain units and the count for the each available time domain unit, includes:
**[**00249] determining the RV applicable to the each available time domain unit according to the following table:

| RV_{id} of the first available time domain unit | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**00250] wherein mod represents a modulo operation.

**[**00251] In example 12, the method of any one of examples 1 to 11, wherein the first physical channel includes a Physical Uplink Shared Channel (PUSCH), and the method further includes:
**[**00252] receiving first indication information from a network device, the first indication information being configured to indicate a count for available time domain units including a cancelled available time domain unit.

**[**00253] In example 13, the method of any one of examples 1 to 11, wherein the first physical channel includes a Physical Downlink Shared Channel (PDSCH), and the method further includes:
**[**00254] sending first indication information to a terminal device, the first indication information being configured to indicate a count for available time domain units including a cancelled available time domain unit.

**[**00255] In example 14, the method of any one of examples 1 to 13, wherein the available time domain unit includes at least one consecutive slot or at least one consecutive symbol.

**[**00256] In example 15, the method of any one of examples 1 to 14, wherein the available time domain unit includes at least one symbol allocated by Time Domain Resource Allocation (TDRA) within a slot, and the at least one symbol is used for uplink transmission.

**[**00257] In example 16, the method of any one of examples 1 to 14, wherein the available time domain unit includes at least one consecutive symbol, and the at least one consecutive symbol is used for uplink transmission.

**[**00258] In example 17, there is provided a wireless communication method, including:
**[**00259] determining a number of repetitions of a first physical channel;
**[**00260] counting a plurality of available time domain units corresponding to the first physical channel to obtain a count for each of the plurality of available time domain units; and
**[**00261] performing reception of repeated data of the first physical channel based on the number of repetitions and the count for the each available time domain unit.

**[**00262] In example 18, the method of example 17, wherein performing reception of the repeated data of the first physical channel based on the number of repetitions and the count for the each available time domain unit includes:
**[**00263] when an initial value of the counting is one and the count for the each available time domain unit is less than or equal to the number of repetitions, performing the reception of the repeated data of the first physical channel; otherwise, terminating the reception of the repeated data of the first physical channel; or
**[**00264] when an initial value of the counting is zero and the count for the available time domain unit is less than or equal to a difference between the number of repetitions and one, performing the reception of the repeated data of the first physical channel; otherwise, terminating the reception of the repeated data of the first physical channel.

**[**00265] In example 19, the method of example 17 or 18, wherein the plurality of available time domain units includes a cancelled available time domain unit.

**[**00266] In example 20, the method of example 19, wherein the cancelled available time domain unit includes:
**[**00267] a cancelled available time domain unit indicated by a network device; and/or
**[**00268] a cancelled available time domain unit of which cancellation is due to user equipment (UE) and is unknown to the network device.

**[**00269] In example 21, the method of example 20, wherein the cancelled available time domain unit of which cancellation is due to the UE and is unknown to the network device satisfies at least one of the following conditions:
**[**00270] a transmission power of an available time domain unit being limited; or
**[**00271] there being a first signal to be sent, and a priority of the first signal being higher than a priority of the physical channel.

**[**00272] In example 22, the method of example 21, wherein the first signal includes at least one of: Physical Uplink Control Channel (PUCCH), Physical Random Access Channel (PRACH) or Sounding Reference Signal (SRS).

**[**00273] In example 23, the method of any one of examples 17 to 22, wherein a number of the plurality of available time domain units is greater than or equal to a number of available time domain units on which actual reception of the repeated data is performed.

**[**00274] In example 24, the method of any one of examples 17 to 23, wherein performing reception of the repeated data of the first physical channel based on the number of repetitions and the count for the each available time domain unit, includes:
**[**00275] determining a redundancy version (RV) applicable to the each available time domain unit based on the count for the each available time domain unit; and
**[**00276] performing the reception of the repeated data of the first physical channel based on the number of repetitions and the RV applicable to the each available time domain unit.

**[**00277] In example 25, the method of example 24, wherein determining the RV applicable to the each available time domain unit based on the count for the each available time domain unit, includes:
**[**00278] determining the RV applicable to the each available time domain unit, in a manner of a cycling order of RV identification (RV_{id}) 0, 2, 3, 1 based on an RV applicable to a first available time domain unit of the plurality of available time domain units and the count for the each available time domain unit.

**[**00279] In example 26, the method of example 25, wherein the RV of the first available time domain unit is an RV_{id} indicated by Downlink Control Information (DCI) for scheduling a Physical Uplink Shared Channel (PUSCH).

**[**00280] In example 27, the method of example 25, wherein determining the RV applicable to the each available time domain unit, in the manner of the cycling order of the RV identification 0, 2, 3, 1 based on the RV applicable to the first available time domain unit of the plurality of available time domain units and the count for the each available time domain unit, includes:
**[**00281] determining the RV applicable to the each available time domain unit according to the following table:

| RV_{id} of the first available time domain unit | RV_{id} applicable to an n^{th} available time domain unit | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

**[**00282] wherein mod represents a modulo operation.

**[**00283] In example 28, the method of any one of examples 17 to 27, wherein the first physical channel includes a Physical Uplink Shared Channel (PUSCH), and the method further includes:
**[**00284] sending first indication information to a terminal device, the first indication information being configured to indicate a count for available time domain units including a cancelled available time domain unit.

**[**00285] In example 29, the method of any one of examples 17 to 27, wherein the first physical channel includes a Physical Downlink Shared Channel (PDSCH), and the method further includes:
**[**00286] receiving first indication information from a network device, the first indication information being configured to indicate a count for available time domain units including a cancelled available time domain unit.

**[**00287] In example 30, the method of any one of examples 17 to 28, wherein the available time domain unit includes at least one consecutive slot or at least one consecutive symbol.

**[**00288] In example 31, the method of any one of examples 17 to 29, wherein the available time domain unit includes at least one symbol allocated by Time Domain Resource Allocation (TDRA) within a slot, and the at least one symbol is used for uplink transmission.

**[**00289] In example 32, the method of any one of examples 17 to 29, wherein the available time domain unit includes at least one consecutive symbol, and the at least one consecutive symbol is used for uplink transmission.

**[**00290] In example 33, there is provided a first device, including:
**[**00291] a determination unit, configured to determine a number of repetitions of a first physical channel;
**[**00292] a processing unit, configured to count a plurality of available time domain units corresponding to the first physical channel to obtain a count for each of the plurality of available time domain units; and
**[**00293] a sending unit, configured to send repeated data of the first physical channel based on the number of repetitions and the count for the each available time domain unit.

**[**00294] In example 34, there is provided a second device, including:
**[**00295] a determination unit, configured to determine a number of repetitions of a first physical channel;
**[**00296] a processing unit, configured to count a plurality of available time domain units corresponding to the first physical channel to obtain a count for each of the plurality of available time domain units; and
**[**00297] a receiving unit, configured to perform reception of repeated data of the first physical channel based on the number of repetitions and the count for the each available time domain unit.

**[**00298] In example 35, there is provided a first device, including: a processor and a memory, wherein the memory is configured to store a computer program, and the processor is configured to call and run the computer program stored in the memory to execute the method of any one of examples 1 to 16.

**[**00299] In example 36, there is provided a second device, including: a processor and a memory, wherein the memory is configured to store a computer program, and the processor is configured to call and run the computer program stored in the memory to execute the method of any one of examples 17 to 32.

**[**00300] In example 37, there is provided a chip, including: a processor configured to call and run a computer program from a memory, to enable a device equipped with the chip to execute the method of any one of examples 1 to 16, or the method of any one of examples 17 to 32.

**[**00301] In example 38, there is provided a computer-readable storage medium having stored therein a computer program, wherein the computer program enables a computer to execute the method of any one of examples 1 to 16, or the method of any one of examples 17 to 32.

**[**00302] In example 39, there is provided a computer program product, including a computer program instruction, wherein the computer program instruction enables a computer to execute the method of any one of examples 1 to 16, or the method of any one of examples 17 to 32.

**[**00303] In example 40, there is provided a computer program, enabling a computer to execute the method of any one of examples 1 to 16, or the method of any one of examples 17 to 32.

**[**00304] It should be understood that the terms used in the embodiments of the present disclosure and the appended claims are for the purpose of describing the specific embodiments only, but are not intended to limit the embodiments of the disclosure. For example, the singular forms "a", "an", "said", and "the" used in the embodiments of the disclosure and the appended claims are also intended to include the plural forms, unless the context clearly indicates otherwise.

**[**00305] Those skilled in the art may recognize that the elements and algorithm steps in various examples described in combination with the embodiments disclosed herein can be implemented in electronic hardware, or a combination of computer software and electronic hardware. Whether these functions are implemented in hardware or software depends on the specific application and design constraints of the technical solutions. Those skilled in the art may use different methods to implement the described functions for each particular application, but such implementation should not be considered to be beyond the scope of the disclosure. The functions, if implemented in a form of software functional units and sold or used as an independent product, may be stored in a computer-readable storage medium. Based on such understanding, the technical solution of the embodiments of the disclosure, in essence, or the part contributing to the prior art, or a part of the technical solution, may be embodied in the form of a software product, which is stored in a storage medium, and includes several instructions for causing a computer device (which may be a personal computer, a server, or a network device, etc.) to perform all or part of operations of the methods in the embodiments of the disclosure. The aforementioned storage medium includes various media, such as a U disk, a mobile hard disk, a read-only memory, a random access memory, a magnetic disk, or an optical disk, which are capable of storing program codes.

**[**00306] Those skilled in the art may clearly understand that the specific working processes of the systems, devices and units described above may refer to the corresponding processes in the aforementioned method embodiments and will not be repeated herein for convenience and conciseness of description. In several embodiments provided by the disclosure, it should be understood that the disclosed systems, devices and methods may be implemented in other ways. For example, the division of the units or modules or components in the device embodiments described above is only a logical function division, and there may be other division manners in actual implementation. For example, multiple units or modules or components may be combined or integrated into another system, or some units or modules or components may be ignored or not executed. For another example, the units or modules or components described as separate/shown components may or may not be physically separated, that is, they may be located in one place or may be distributed across multiple network units. Part or all of the units or modules or components may be selected according to actual needs to achieve the purpose of the embodiments of the disclosure. At the end, it should be noted that the coupling or direct coupling or communication connection between the devices or units shown or discussed above may be via some interfaces, and the indirect coupling or communication connection between the devices or units may be electrical, mechanical or in other forms.

**[**00307] The foregoing are merely specific implementations of the embodiments of the disclosure, but the protection scope of the embodiments of the disclosure is not limited thereto. Any variation or substitution that may easily occur to a person skilled in the art within the technical scope disclosed by the embodiments of the present disclosure shall be included within the protection scope of the embodiments of the present disclosure. Therefore, the protection scope of the embodiments of the present disclosure shall be defined by the protection scope of the claims.

## Claims

1. A wireless communication method, performed by User Equipment, UE, and comprising:
determining (S210) a number of repetitions of a first physical channel;
counting (S220) a plurality of available time domain units corresponding to the first physical channel to obtain a count for each of the plurality of available time domain units; and
performing (S230) sending of repeated data of the first physical channel based on the number of repetitions and the count for the each available time domain unit.

2. The method of claim 1, wherein the plurality of available time domain units comprise a cancelled available time domain unit, and the cancelled available time domain unit comprises a cancelled available time domain unit of which cancellation is due to the UE, and is unknown to a network device,
wherein the cancelled available time domain unit of which cancellation is due to the UE and is unknown to the network device satisfies at least one of the following conditions:
a transmission power of an available time domain unit being limited; or
there being a first signal to be sent, and a priority of the first signal being higher than a priority of the first physical channel,
wherein the first signal comprises at least one of: Physical Uplink Control Channel, PUCCH, Physical Random Access Channel, PRACH, or Sounding Reference Signal, SRS.

3. The method of claim 1 or 2, wherein a number of the plurality of available time domain units is greater than or equal to a number of available time domain units on which actual sending of the repeated data is performed.

4. The method of any one of claims 1 to 3, wherein performing (S230) the sending of the repeated data of the first physical channel based on the number of repetitions and the count for the each available time domain unit, comprises:
determining a redundancy version, RV, applicable to the each available time domain unit based on the count for the each available time domain unit; and
performing the sending of the repeated data of the first physical channel based on the number of repetitions and the RV applicable to the each available time domain unit.

5. The method of claim 4, wherein determining the RV applicable to the each of available time domain unit based on the count for the each available time domain unit, comprises:
determining the RV applicable to the each available time domain unit, in a manner of a cycling order of RV identification, RV_{id}, 0, 2, 3, 1 based on an RV applicable to a first available time domain unit of the plurality of available time domain units and the count for the each available time domain unit.

6. The method of claim 5, wherein the RV of the first available time domain unit is an RV_{id} indicated by Downlink Control Information, DCI, for scheduling a Physical Uplink Shared Channel, PUSCH.

7. The method of any one of claims 1 to 6, wherein the first physical channel comprises a Physical Uplink Shared Channel, PUSCH, and the method further comprises:
receiving first indication information from a network device, the first indication information being configured to indicate a count for available time domain units comprising a cancelled available time domain unit.

8. A User equipment, UE, comprising:
a determination unit (410), configured to determine a number of repetitions of a first physical channel;
a processing unit (420), configured to count a plurality of available time domain units corresponding to the first physical channel to obtain a count for each of the plurality of available time domain units; and
a sending unit (430), configured to perform sending of repeated data of the first physical channel based on the number of repetitions and the count for the each available time domain unit.

9. The UE of claim 8, wherein the plurality of available time domain units comprise a cancelled available time domain unit, and the cancelled available time domain unit comprises a cancelled available time domain unit of which cancellation is due to the UE, and is unknown to a network device,
wherein the cancelled available time domain unit of which cancellation is due to the UE and is unknown to the network device satisfies at least one of the following conditions:
a transmission power of an available time domain unit being limited; or
there being a first signal to be sent, and a priority of the first signal being higher than a priority of the first physical channel,
wherein the first signal comprises at least one of: Physical Uplink Control Channel, PUCCH, Physical Random Access Channel, PRACH, or Sounding Reference Signal, SRS.

10. The UE of claim 8 or 9, wherein a number of the plurality of available time domain units is greater than or equal to a number of available time domain units on which actual sending of the repeated data is performed.

11. The UE of any one of claims 8 to 10, wherein the sending unit (430) is configured to:
determine a redundancy version, RV, applicable to the each available time domain unit based on the count for the each available time domain unit; and
perform the sending of the repeated data of the first physical channel based on the number of repetitions and the RV applicable to the each available time domain unit.

12. The UE of claim 11, wherein the operation of determining the RV applicable to the each of available time domain unit based on the count for the each available time domain unit, comprises:
determining the RV applicable to the each available time domain unit, in a manner of a cycling order of RV identification, RV_{id}, 0, 2, 3, 1 based on an RV applicable to a first available time domain unit of the plurality of available time domain units and the count for the each available time domain unit.

13. The UE of claim 12, wherein the RV of the first available time domain unit is an RV_{id} indicated by Downlink Control Information, DCI, for scheduling a Physical Uplink Shared Channel, PUSCH.

14. The UE of any one of claims 9 to 13, wherein the first physical channel comprises a Physical Uplink Shared Channel, PUSCH, and the sending unit (430) is further configured to:
receive first indication information from a network device, the first indication information being configured to indicate a count for available time domain units comprising a cancelled available time domain unit.
